(19) Europäisches Patentamt European Patent Office Office européen des brevets

(11) **EP 3 398 424 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
*A01C 15/00* [(2006.01)]   *A01C 17/00* [(2006.01)]
*G01G 1/00* [(2006.01)]   *G01G 19/08* [(2006.01)]

(21) Anmeldenummer: **18401041.1**

(22) Anmeldetag: **18.04.2018**

(54) **GEZOGENE VERTEILMASCHINE**

DRAWN DISTRIBUTION MACHINE

MACHINE DE DISTRIBUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2017 DE 102017109644**

(43) Veröffentlichungstag der Anmeldung:
**07.11.2018 Patentblatt 2018/45**

(73) Patentinhaber: **Amazonen-Werke H. Dreyer GmbH & Co. KG**
**49205 Hasbergen (DE)**

(72) Erfinder: **Kleine-Hartlage, Hubertus**
**49186 Bad Iburg (DE)**

(56) Entgegenhaltungen:
**EP-A1- 1 739 398     EP-A2- 2 275 287**
**GB-A- 2 304 910     US-A- 5 814 771**

## Beschreibung

Die Erfindung betrifft einen gezogenen Großflächenstreuer.

Derartige Großflächenstreuer weisen entsprechend der EP 1 739 398 A1 und der DE 101 54 733 A1 üblicherweise einen Vorratsbehälter auf, welcher zur Aufnahme eines zu verteilenden Materials ausgebildet ist. Das zu verteilende Material wird mittels einer Verteileinrichtung vorzugsweise gleichmäßig auf einer Fläche, beispielsweise einer Ackerfläche, verteilt. Diese als Anhänger, also gezogen, ausgebildeter Großflächenstreuer setzen zur Gewichtserfassung mehrere Wiegeeinheiten ein.

Bei der Beladung entsprechender Verteilmaschinen sind unterschiedliche Maschinenparameter zu beachten, beispielsweise um das zulässige Gesamtgewicht der Verteilmaschine bei der Befüllung des Vorratsbehälters nicht zu überschreiten. Hierzu schlägt die Druckschrift EP 2 275 287 B1 bei einer als Ladewagen ausgebildeten Landmaschine vor, welche eine Gewichtserfassungseinrichtung zur Erfassung des Beladungszustands der Maschine aufweist.

Neben dem Beladungszustand einer Verteilmaschine stellt die von der Zugdeichsel einer Verteilmaschine aufzunehmende Stützlast einen sicherheitsrelevanten Maschinenparameter dar. Zur Erfassung der Stützlast an der Zugdeichsel schlägt die Druckschrift EP 2 522 775 A2 vor, einen Streuanhänger mit einer Lasterfassungseinrichtung direkt an der Deichsel auszustatten. Darüber hinaus ist aus der Druckschrift DE 20 2005 017 281 U1 ein Anhänger bekannt, bei welchem die Stützlast der Zugdeichsel mittels einer Messeinheit zwischen dem Rahmen des Anhängers und der Zugdeichsel erfasst wird.

Des Weiteren ist durch die US 5 814 771 ein Lastwiegesystem für einen als Sattelauflieger ausgebildeten Transportwagen mit einem Transportbehälter und einer Zugmaschine, um Material von einem Ort zu einem anderen zu bringen, bekannt. Der Transportwagen weist hier weder eine Zugdeichsel noch eine Verteileinrichtung, mittels welcher das sich im Transportbehälter befindliche Material auf einer landwirtschaftlichen Fläche gleichmäßig auswerfend verteilt werden könnte, auf. Dem Transportbehälter ist ein Tragrahmen zugeordnet. Der Tragrahmen ist im hinteren Bereich über Wiegezellen aufweisende Verbindungselemente mit den Hinterachsen und im vorderen Bereich Wiegezellen aufweisende Verbindungselemente mit dem Kupplungselementen des Zugfahrzeugs verbunden. Mittels der Wiegezellen kann das Gesamtgewicht des sich im Transportbehälter befindlichen Materiales mittels einer geeigneten elektrischen Auswerteeinrichtung ermittelt werden.

Durch die GB 2 304 910 ist schließlich ein Lastwiegesystem für einen gezogenen Transportanhänger mit einem Transportbehälter bekannt. Der Transportanhänger weist einen Tragrahmen auf, der sich über hintere Laufräder auf dem Boden und über die an dem vorderen Ende des Tragrahmens angeordnete Zugdeichsel auf die Zugkupplung eines Zugfahrzeugs abstützt. Mittels dieses Transportanhängers kann Material von einem Ort zu einem anderen gebracht werden. Der Transportwagen weist hier weder eine Zugdeichsel noch eine Verteileinrichtung, mittels welcher das sich im Transportbehälter befindliche Material auf einer landwirtschaftlichen Fläche gleichmäßig auswerfend verteilt werden könnte, auf. Zwischen dem Tragrahmen und der Unterseite des Transportbehälters sind an den jeweiligen Ecken des Transportbehälters beabstandet zueinander positionierte Wiegezellen angeordnet. Mittels der Wiegezellen kann das Gesamtgewicht des sich im Transportbehälter befindlichen Materiales mittels einer geeigneten elektronischen Auswerteeinrichtung ermittelt werden.

Diese und andere bekannte Lösungen sind jedoch aufwändig und/oder beschädigungsanfällig und/oder nicht in der Lage, dem Bediener der Verteilmaschine ausreichende Informationen über den Lastzustand der Verteilmaschine bereitzustellen.

Die der Erfindung zugrunde liegende Aufgabe besteht somit darin, einen gezogenen Großflächenstreuer bereitzustellen, bei welcher der Lastzustand auf einfache und beschädigungsunanfällige Weise überwacht werden kann.

Die Aufgabe wird gelöst durch einen Großflächenstreuer gemäß des Anspruches 1 gelöst. Dieser erfindungsgemäße Streuer weist mehrere voneinander beabstandet angeordnete Kraftaufnehmer auf, welche dazu eingerichtet sind, die von dem Vorratsbehälter auf den jeweiligen Kraftaufnehmer ausgeübte Gewichtskraft zu erfassen. Ferner umfasst die Verteilmaschine einen Tragrahmen, welcher den Vorratsbehälter trägt, wobei die mehreren Kraftaufnehmer zwischen dem Tragrahmen und dem Vorratsbehälter angeordnet sind. Erfindungsgemäß weist die Verteilmaschine eine Auswerteeinrichtung auf, welche dazu eingerichtet ist, auf Grundlage der Signale der Kraftaufnehmer die Last an einer oder mehreren Positionen der Verteilmaschine zu zu ermitteln.

Die Erfindung macht sich die Erkenntnis zunutze, dass zur Ermittlung des Lastzustandes an einer ausgewählten Position nicht zwangsläufig die Anordnung eines Kraftaufnehmers an dieser ausgewählten Position erforderlich ist. Vielmehr kann das Erfassen und/oder das Ermitteln der Last an der einen oder den mehreren Positionen der Verteilmaschine durch eine entsprechende Berechnung erfolgen, wobei die Berechnung die durch die jeweiligen Kraftaufnehmer erfassten Gewichtskräfte berücksichtigt. Die Berechnung kann beispielsweise auf einem Kräftegleichgewicht und/oder einem Momentengleichgewicht basieren. Sämtliche Kraftaufnehmer sind beabstandet von der einen oder den mehreren Positionen, an welchen die Last von der Auswerteeinrichtung ermittelt wird, angeordnet. Die gezogene Verteilmaschine ist erfindungsgemäß als Großflächenstreuer ausgebildet. Bei dem zu verteilenden Material handelt es sich beispielsweise um Streugut, insbesondere um Dünger. Bevorzugt ist ferner ein gezogener Großflächenstreuer, bei welchem die Verteileinrichtung als Zentrifugalstreuwerk ausgebildet ist. Vorzugsweise ist der gezogene Großflächenstreuer ein Einachsanhänger oder ein Tandemachsanhänger, welcher über eine tragfähige und Stützlast aufnehmende Zugdeichsel verfügt. Vorzugsweise umfasst der gezogene Großflächenstreuer keine mehreren voneinander beabstandet angeordneten Achsen, wie beispielsweise eine Vorderachse und eine Hinterachse.

Dieser erfindsgemäße Großflächenstreuer weist eine Tragachse, an welcher zumindest zwei Laufräder angeordnet sind, und eine Stützlast aufnehmende Zugdeichsel auf. Die Auswerteeinrichtung ist dazu eingerichtet, die Achslast der Tragachse zu ermitteln und bei der Ermittlung der Achslast der Tragachse vorzugsweise die Position der Tragachse zu berücksichtigen. Hierbei wird der Abstand der Tragachse zu den jeweiligen Kraftaufnehmern in Längsrichtung des gezogenen Großflächenstreuer berücksichtigt.

Vorzugsweise ist ein oder sind zwei oder mehrere Kraftaufnehmer in Fahrtrichtung vor der Tragachse angeordnet. Ferner ist vorzugsweise ein oder sind zwei oder mehrere Kraftaufnehmer in Fahrtrichtung hinter der Tragachse angeordnet. Vorzugsweise sind sämtliche Kraftaufnehmer beabstandet von der Tragachse angeordnet.

Der erfindungsgemäße gezogene Großflächenstreuer weist eine Zugdeichsel zum Koppeln der Verteilmaschine an eine Zugmaschine auf, wobei die Auswerteeinrichtung dazu eingerichtet ist, die Stützlast an der Zugdeichsel zu ermitteln und bei der Ermittlung der Stützlast an der Zugdeichsel die Position der Zugdeichsel zu berücksichtigen. Vorzugsweise wird hierbei der Abstand des Koppelpunktes der Zugdeichsel zu den jeweiligen Kraftaufnehmern und/oder zu der Tragachse in Längsrichtung der Verteilmaschine berücksichtigt. Vorzugsweise sind sämtliche Kraftaufnehmer beabstandet von der Zugdeichsel angeordnet.

Schließlich weist der erfindungsgemäße gezogene Großflächenstreuer eine Anzeigeeinrichtung auf, welche dazu eingerichtet ist, einem Benutzer des gezogenen Großflächenstreuers die ermittelte Last an der einen oder den mehreren Positionen des gezogenen Großflächenstreuers, insbesondere die Achslast der Tragachse und/oder die Stützlast an der Zugdeichsel, anzuzeigen. Hierzu ist die Anzeigeeinrichtung vorzugsweise signalleitend mit der Auswerteeinrichtung verbunden. Zur Komfortsteigerung ist es vorteilhaft, dass die signalleitende Verbindung zwischen der Anzeigeeinrichtung und der Auswerteeinrichtung drahtlos ausgebildet ist, sodass die Auswerteeinrichtung direkt an dem gezogenen Großflächenstreuer angeordnet, insbesondere befestigt sein kann und die Anzeigeeinrichtung im Führerhaus der Zugmaschine des gezogenen Großflächenstreuers angeordnet werden kann. Die Anzeigeeinrichtung kann beispielsweise als Display oder Touchscreen ausgebildet sein. Alternativ oder zusätzlich kann die Auswerteeinrichtung die ermittelte Last an der einen oder den mehreren Positionen einer Schnittstelle bereitstellen, über welche die Zugmaschine des gezogenen Großflächenstreuers auf die ermittelte Last an der einen oder den mehreren Positionen des gezogenen Großflächenstreuers zugreifen und diese abrufen kann.

In einer besonders bevorzugten Ausführungsform des erfindungsgemäßen gezogenen Großflächenstreuers ist die Auswerteeinrichtung dazu eingerichtet, bei der Ermittlung der Last an der einen oder den mehreren des gezogenen Großflächenstreuers die Anordnung und/oder die Position der mehreren Kraftaufnehmer zu berücksichtigen. Insbesondere berücksichtigt die Auswerteeinrichtung bei der Ermittlung der Last an der einen oder den mehreren Positionen des gezogenen Großflächenstreuers den Abstand der einen oder der mehreren Positionen der Verteilmaschine zu den jeweiligen Kraftaufnehmern, insbesondere in Längsrichtung des gezogenen Großflächenstreuers. Alternativ oder zusätzlich kann die Auswerteeinrichtung auch den Abstand der einen oder der mehreren Positionen des gezogenen Großflächenstreuers zu den jeweiligen Kraftaufnehmern quer zur Längsrichtung des gezogenen Großflächenstreuers berücksichtigen.

Vorzugsweise weist die Auswerteeinrichtung einen Speicher auf, in welchem der folgende Zusammenhang hinterlegt ist:

$$F_{St} = \frac{F_1 * a + F_2 * b}{c}$$

wobei $F_1$ die auf den einen oder die mehreren in Fahrtrichtung vor der Tragachse angeordneten Kraftaufnehmer wirkenden Kräfte und $a$ den Abstand des einen oder der mehreren in Fahrtrichtung vor der Tragachse angeordneten Kraftaufnehmer zu der Tragachse bezeichnet und wobei $F_2$ die auf den einen oder die mehreren in Fahrtrichtung hinter der Tragachse angeordneten Kraftaufnehmer wirkenden Kräfte und $b$ den Abstand des einen oder der mehreren in Fahrtrichtung hinter der Tragachse angeordneten Kraftaufnehmer zu der Tragachse bezeichnet. Ferner bezeichnet $F_{St}$ die auf die Beladung des Vorratsbehälters zurückgehende Stützlast an der Zugdeichsel und $c$ den Abstand des Koppelpunkts der Zugdeichsel von der Tragachse des gezogenen Großflächenstreuers. Mithin basiert die oben bezeichnete Gleichung auf einem Momentengleichgewicht um die Tragachse. In analoger Weise kann durch ein Momentengleichgewicht um den Koppelpunkt der Zugdeichsel die auf die Beladung des Vorratsbehälters zurückgehende an der Tragachse wirkende Achslast erfasst werden.

Vorzugsweise ist in dem Speicher der Auswerteeinrichtung der folgende auf einem Kräftegleichgewicht in vertikaler Richtung basierende Zusammenhang hinterlegt:

$$F_A = F_1 + F_2 - F_{St}$$

Somit kann auf Grundlage der auf die Beladung des Vorratsbehälters zurückgehenden Stützlast an der Zugdeichsel die auf die Beladung des Vorratsbehälters zurückgehende an der Tragachse wirkende Achslast ermittelt werden. Ferner kann auf Grundlage der auf die Beladung des Vorratsbehälters zurückgehenden an der Tragachse wirkenden Achslast die auf die Beladung des Vorratsbehälters zurückgehende Stützlast an der Zugdeichsel ermittelt werden.

Vorzugsweise sind in dem Speicher der Auswerteeinrichtung die im unbeladenen Zustand des gezogenen Großflächenstreuers an der Tragachse wirkende Achslast der Verteilmaschine (nachfolgend: $F_{A,leer}$) und/oder die Stützlast an der Zugdeichsel der Verteilmaschine im unbeladenen Zustand der Verteilmaschine (nachfolgend: $F_{St,leer}$) hinterlegt. Somit kann auf Grundlage der auf die Beladung der Verteilmaschine zurückgehenden Stützlast an der Zugdeichsel und der auf die Beladung der Verteilmaschine zurückgehenden an der Tragachse wirkenden Achslast die Gesamtstützlast (nachfolgend: $F_{St,Gesamt}$) an der Zugdeichsel und/oder die an der Tragachse wirkende Gesamtachslast (nachfolgend: $F_{A,Gesamt}$) wie folgt ermittelt werden:

$$F_{St,Gesamt} = F_{St} + F_{St,leer}$$

$$F_{A,Gesamt} = F_A + F_{A,leer}$$

Auf Grundlage der bezeichneten Berechnungsformeln ist der Bediener der Verteilmaschine jederzeit in der Lage, die aktuelle Achslast der Tragachse und/oder die aktuelle Stützlast an der Zugdeichsel abzurufen.

In einer anderen bevorzugten Ausführungsform der erfindungsgemäßen Verteilmaschine umfassen die mehreren Kraftaufnehmer zumindest drei voneinander beabstandete Kraftaufnehmer oder die mehreren Kraftaufnehmer sind exakt vier voneinander beabstandete Kraftaufnehmer. Dadurch, dass zumindest drei voneinander beabstandete Kraftaufnehmer vorhanden sind, kann der Vorratsbehälter vollständig abgestützt werden, sodass eine Erfassung sämtlicher von dem Vorratsbehälter auf den Tragrahmen übertragener Kräfte erfolgen kann. Durch die Verwendung von exakt vier voneinander beabstandeten Kraftaufnehmern kann eine gleichmäßige Abstützung des Vorratsbehälters erfolgen, wodurch Kraftaufnehmer gleicher Bauart und somit Kraftaufnehmer, welche einen übereinstimmenden Krafterfassungsbereich aufweisen, eingesetzt werden können. Hierdurch sinken die Gesamtkosten eines gezogenen Großflächenstreuers.

In einer anderen bevorzugten Ausführungsform des erfindungsgemäßen gezogenen Großflächenstreuers sind zumindest einzelne der mehreren Kraftaufnehmer in Fahrtrichtung voneinander beabstandet angeordnet. Insbesondere ist ein erstes Kraftaufnehmerpaar in Fahrtrichtung von einem zweiten Kraftaufnehmerpaar beabstandet angeordnet.

In einer weiteren vorteilhaften Weiterbildung des erfindungsgemäßen gezogenen Großflächenstreuers sind zumindest einzelne der mehreren Kraftaufnehmer quer zur Fahrtrichtung voneinander beabstandet angeordnet. Insbesondere sind die Kraftaufnehmer eines Kraftaufnehmerpaars jeweils quer zur Fahrtrichtung voneinander beabstandet angeordnet, wobei die jeweiligen Kraftaufnehmer eines Kraftaufnehmerpaars den gleichen Abstand zur Längsachse des gezogenen Großflächenstreuers aufweisen. Durch die Beabstandung von Kraftaufnehmern quer zur Fahrtrichtung kann einerseits eine homogene Kraftverteilung auf sämtliche Kraftaufnehmer umgesetzt werden und andererseits können die Auswirkungen von Querbeschleunigungen der Verteilmaschine auf den Lastzustand der Verteilmaschine überwacht werden. Auf diese Weise können auch Lastzustandsänderungen bei Kurvenfahrten oder andauernder Schräglage bei der Ermittlung der Last an der einen oder den mehreren Positionen der Verteilmaschine berücksichtigt werden.

In einer weiteren bevorzugten Ausführungsform 2. des erfindungsgemäßen gezogenen Großflächenstreuers ist der Tragrahmen der Fahrwerksrahmen des gezogenen Großflächenstreuers Alternativ kann der Tragrahmen auf den Fahrwerksrahmen des gezogenen Großflächenstreuers aufgesetzt sein. Zur Verbesserung der Betriebseigenschaften entsprechender gezogener Großflächenstreuer kommen auch Mehrrahmenkonstruktionen zum Einsatz, beispielsweise um eine Verfahrbarkeit des Vorratsbehälters zu realisieren und/oder den Vorratsbehälter von dem Fahrwerksrahmen des gezogenen Großflächenstreuers zu entkoppeln. Die mehreren Kraftaufnehmer können derart zwischen dem Tragrahmen und dem Vorratsbehälter angeordnet sein, dass die mehreren Kraftaufnehmer jeweils den Tragrahmen und/oder den Vorratsbehälter berühren. Alternativ können die mehreren Kraftaufnehmer auch derart zwischen dem Tragrahmen und dem Vorratsbehälter angeordnet sein, dass ein oder mehrere Zwischenelemente zwischen den Kraftaufnehmern und dem Tragrahmen und/oder zwischen den Kraftaufnehmern und dem Vorratsbehälter angeordnet sind.

Weitere Einzelheiten der Erfindung sind der Figurenbeschreibung und den Zeichnungen zu entnehmen. Es zeigen

Fig. 1     ein Ausführungsbeispiel des erfindungsgemäßen gezogenen Großflächenstreuers in einer Seitenansicht;

Fig. 2     der in der Fig. 1 dargestellte Großflächenstreuer ohne Vorratsbehälter in einer Draufsicht; und

Fig. 3 Teile eines erfindungsgemäßen gezogenen Großflächenstreuers in einer schematischen Darstellung.

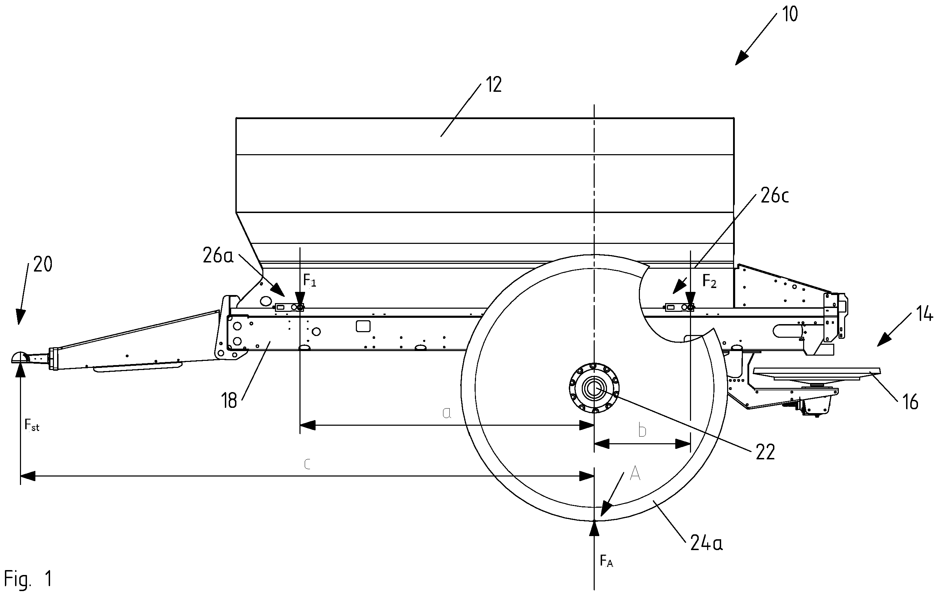

Die Fig. 1 zeigt eine als Großflächenstreuer ausgebildete gezogene Verteilmaschine 10 mit einem Vorratsbehälter 12, einer Verteileinrichtung 14, einem Tragrahmen 18, einer Zugdeichsel 20 und einer Tragachse 22.

Der Vorratsbehälter 12 ist dazu eingerichtet, zu verteilendes Material aufzunehmen. Das zu verteilende Material kann dabei beispielsweise ein körniges Streugut, wie etwa Dünger, sein. Der Vorratsbehälter 12 ist aus einem Metall oder einer Metalllegierung ausgebildet. Beispielsweise kann der Vorratsbehälter 12 aus Stahlblech ausgebildet sein und ein Behälterfassungsvermögen zwischen 5000 Litern und 10000 Litern aufweisen.

Die Verteileinrichtung 14 ist dazu eingerichtet, das in dem Vorratsbehälter 12 befindliche Material zu verteilen. Die Verteileinrichtung 14 ist als Zentrifugalstreuwerk ausgebildet und weist eine Streuscheibe 16 auf, welche das zu verteilende Material beschleunigt und vorzugsweise gleichmäßig auf eine Fläche, wie etwa eine Ackerfläche, auswirft. Die Streuscheibe 16 ist mit einem mechanischen Streuscheibenantrieb verbunden, welcher beispielsweise für Zapfwellendrehzahlen zwischen 500 Umdrehungen pro Minute und 1000 Umdrehungen pro Minute ausgelegt ist.

Der Tragrahmen 18 trägt den Vorratsbehälter 12 und ist mit der Zugdeichsel 20 verbunden. Der Tragrahmen 18 ist gleichzeitig der Fahrwerksrahmen der Verteilmaschine 10, wobei der Tragrahmen 18 beispielsweise für Nutzlasten zwischen 5 Tonnen und 10 Tonnen ausgelegt sein kann. Die Zugdeichsel 20 dient zum Koppeln der Verteilmaschine 10 an eine Zugmaschine. Die Zugdeichsel 20 stützt die Verteilmaschine 10 gegenüber dem Kupplungssystem der Zugmaschine ab, sodass an der Zugdeichsel 20 eine Stützlast $F_{St}$ wirkt. Die Zugdeichsel 20 kann Bestandteil eines gefederten und/oder höhenverstellbaren Deichselsystems sein. Die Zugdeichsel 20 kann abhängig von der genutzten Zugmaschine als Obenanhängung mit Zugöse, als Untenanhängung mit Zugöse oder als Lenkdeichsel mit Kugelkopf ausgebildet sein.

An der Tragachse 22 sind zwei Laufräder 24a, 24b angeordnet. Die Laufräder 24a, 24b stützen die Verteilmaschine 10 gegenüber dem Boden ab, sodass an der Tragachse 22 eine Achslast $F_A$ wirkt. Die Laufräder 24a, 24b können beispielsweise derart ausgebildet und angeordnet sein, dass Spurweiten zwischen 1,50 Meter und 2,50 Meter realisierbar sind.

Zwischen dem Tragrahmen 18 und dem Vorratsbehälter 12 sind insgesamt vier voneinander beabstandete Kraftaufnehmer 26a, 26c (die Kraftaufnehmer 26b, 26d sind verdeckt) angeordnet. Die Kraftaufnehmer 26a-26d sind dazu eingerichtet, die von dem Vorratsbehälter 12 auf den jeweiligen Kraftaufnehmer 26a-26d ausgeübte Gewichtskraft zu erfassen.

Sämtliche Kraftaufnehmer 26a-26d sind beabstandet von der Zugdeichsel 20 und der Tragachse 22 angeordnet. Ein erstes Kraftaufnehmerpaar 26a (der zweite Kraftaufnehmer 26b des ersten Kraftaufnehmerpaars ist verdeckt) ist in Fahrtrichtung vor der Tragachse 22 angeordnet. Die Kraftaufnehmer 26a, 26b des ersten Kraftaufnehmerpaars weisen einen Abstand a zu der Tragachse 22 auf. Auf das erste Kraftaufnehmerpaar wirkt insgesamt die von dem Vorratsbehälter 12 verursachte Kraft $F_1$. Ein zweites Kraftaufnehmerpaar 26c (der zweite Kraftaufnehmer 26d des zweiten Kraftaufnehmerpaars ist verdeckt) ist in Fahrtrichtung hinter der Tragachse 22 angeordnet. Die Kraftaufnehmer 26c, 26d des zweiten Kraftaufnehmerpaars weisen einen Abstand b zu der Tragachse auf. Der Koppelpunkt der Zugdeichsel 20 weist einen Abstand c zu der Tragachse auf. Auf das zweite Kraftaufnehmerpaar wirkt insgesamt die von dem Vorratsbehälter 12 verursachte Kraft $F_2$.

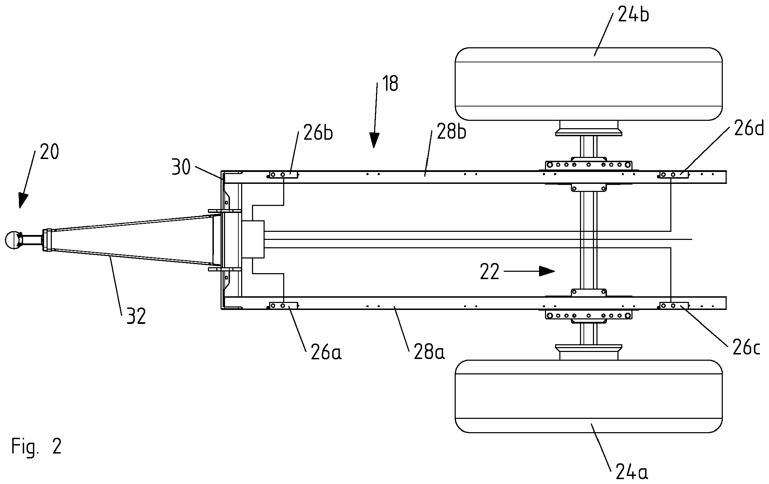

Wie in der Fig. 2 dargestellt, sind die Kraftaufnehmer 26a, 26b des ersten Kraftaufnehmerpaars und die Kraftaufnehmer 26c, 26d des zweiten Kraftaufnehmerpaars jeweils quer zur Fahrtrichtung voneinander beabstandet angeordnet. Die Kraftaufnehmer 26a, 26c sind an einer ersten Längsstrebe 28a des Tragrahmens 18 angeordnet, wobei die Kraftaufnehmer 26b, 26d an einer zweiten Längsstrebe 28b des Tragrahmens 18 angeordnet sind. Die Längsstreben 28a, 28b sind über eine Querstrebe 30 mit einer Deichselbefestigung 32 verbunden.

Die vier Kraftaufnehmer 26a-26d sind signalleitend mit einer Auswerteeinrichtung 34 verbunden, wobei die Auswerteeinrichtung 34 dazu eingerichtet ist, auf Grundlage der Signale der Kraftaufnehmer 26a-26d die Last an zumindest zwei Positionen der Verteilmaschine 10 zu ermitteln. Die erste Position, an welcher die Auswerteeinrichtung 34 die Last bestimmt, ist der Kopplungspunkt der Zugdeichsel 20. Somit ist die Auswerteeinrichtung 34 dazu eingerichtet, die Stützlast $F_{St}$ an der Zugdeichsel 20 zu ermitteln. Die zweite Position, an welcher die Auswerteeinrichtung 34 die Last bestimmt, ist die Tragachse 22. Somit ist die Auswerteeinrichtung 34 dazu eingerichtet, die an der Tragachse 22 wirkende Achslast $F_A$ zu ermitteln.

Das Ermitteln der Stützlast $F_{St}$ an der Zugdeichsel 20 und der an der Tragachse 22 wirkenden Achslast $F_A$ erfolgt durch eine Berechnung. In einem Speicher der Auswerteeinrichtung 34 sind die Abstände a, b der jeweiligen Kraftaufnehmer 26a-26d zu der Tragachse 22 und der Abstand c des Koppelpunkts der Zugdeichsel 20 zu der Tragachse 22 hinterlegt, sodass die Auswerteeinrichtung 34 bei der Erfassung der Stützlast $F_{St}$ an der Zugdeichsel 20 und der an der Tragachse 22 wirkenden Achslast $F_A$ die Positionen der Kraftaufnehmer 26a-26d berücksichtigen kann.

Die Berechnung der Stützlast $F_{St}$ an der Zugdeichsel 20 erfolgt zunächst auf Basis des nachfolgend angegebenen Momentengleichgewichts um die Tragachse:

$$\sum M_A = F_{St} * c - F_1 * a + F_2 * b = 0$$

Nach Umstellung der Gleichung kann die auf die Gewichtskraft des Vorratsbehälters zurückgehende Stützlast $F_{St}$ an der Zugdeichsel 20 ermittelt werden:

$$F_{St} = \frac{F_1 * a + F_2 * b}{c}$$

In dem Speicher der Auswerteeinrichtung 34 ist außerdem die Stützlast $F_{St,leer}$ an der Zugdeichsel 20 im unbeladenen Zustand des gezogenen Großflächenstreuers 10 hinterlegt, dass sich die Gesamtstützlast $F_{St,Gesamt}$ an der Zugdeichsel 20 im beladenen Zustand des gezogenen Großflächenstreuers 10 aus dem folgenden Zusammenhang ergibt:

$$F_{St,Gesamt} = F_{St} + F_{St,leer}$$

Die Berechnung der auf die Gewichtskraft des Vorratsbehälters 12 zurückgehenden an der Tragachse 22 wirkenden Achslast $F_A$ erfolgt auf Basis des nachfolgend angegebenen Kräftegleichgewichts:

$$F_A = F_1 + F_2 - F_{St}$$

In dem Speicher der Auswerteeinrichtung 34 ist außerdem die an der Tragachse 22 wirkende Achslast $F_{A,leer}$ im unbeladenen Zustand der Verteilmaschine 10 hinterlegt, sodass sich die an der Tragachse 22 wirkende Gesamtachslast $F_{A,Gesamt}$ im beladenen Zustand der Verteilmaschine 10 aus dem folgenden Zusammenhang ergibt:

$$F_{A,Gesamt} = F_A + F_{A,leer}$$

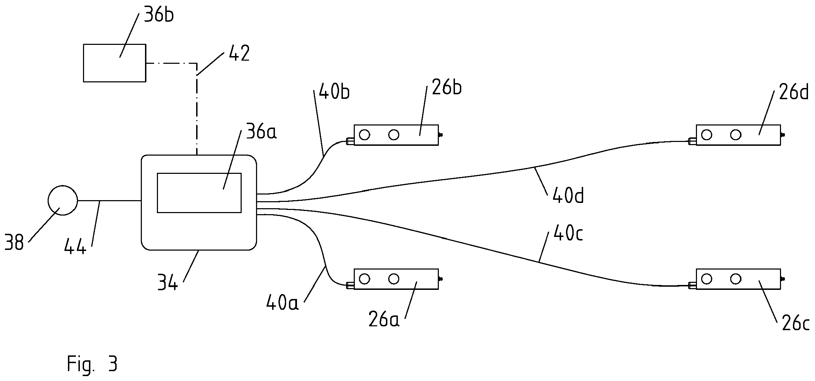

Die Fig. 3 zeigt, dass die Kraftaufnehmer 26a-26d über die Signalleitungen 40a-40d mit der Auswerteeinrichtung 34 verbunden sind. Eine erste Anzeigeeinrichtung 36a, welche direkt an der Auswerteeinrichtung 34 angeordnet ist, und eine zweite Anzeigeeinrichtung 36b, welche über die drahtlose Signalleitung 42 mit der Auswerteeinrichtung 34 verbunden ist, sind jeweils dazu eingerichtet, einem Benutzer der Verteilmaschine 10 die ermittelte Stützlast an der Zugdeichsel 20 und die ermittelte an der Tragachse 22 wirkende Achslast anzuzeigen. **[0041]** Die Anzeigeeinrichtungen 36a, 36b sind jeweils als Displays ausgebildet, wobei die erste Anzeigeeinrichtung 36a aus der direkten Umgebung der Verteilmaschine 10 ablesbar und die Anzeigeeinrichtung 36b beispielsweise innerhalb der Führerkabine der Zugmaschine positionierbar ist.

Ferner ist die Auswerteeinrichtung 34 über die Signalleitung 44 mit einer Schnittstelle 38 verbunden, über welche die Signale der Kraftaufnehmer 26a-26d, die ermittelte Stützlast an der Zugdeichsel 20 und/oder die ermittelte an der Tragachse 22 wirkende Achslast an die Steuerung der Zugmaschine übergeben werden können.

**Bezugszeichenliste**

| 10 | Verteilmaschine |
|---|---|
| 12 | Vorratsbehälter |
| 14 | Verteileinrichtung |
| 16 | Streuscheibe |
| 18 | Tragrahmen |
| 20 | Zugdeichsel |
| 22 | Tragachse |
| 24a, 24b | Laufräder |
| 26a-26d | Kraftaufnehmer |
| 28a, 28b | Längsstreben |
| 30 | Querstrebe |
| 32 | Deichselbefestigung |
| 34 | Auswerteeinrichtung |
| 36a, 36b | Anzeigeeinrichtungen |
| 38 | Schnittstelle |
| 40a-40d | Signalleitungen |
| 42 | Signalleitung |
| 44 | Signalleitung |

a, b, c    Abstände

**Patentansprüche**

1.  Gezogener Großflächenstreuer (10), mit einem Vorratsbehälter (12), einer Zugdeichsel (20), und zumindest einer Tragachse (22),

    - wobei der Vorratsbehälter (12) dazu eingerichtet ist, zu verteilendes Material aufzunehmen;
    - wobei die Verteileinrichtung (14) dazu eingerichtet ist, das in dem Vorratsbehälter (12) befindliche Material gleichmäßig auf einer Ackerfläche zu verteilen;
    - wobei mehrere voneinander beabstandet angeordnete Kraftaufnehmer (26a-26d) vorhanden sind, welche dazu eingerichtet sind, die von dem Vorratsbehälter (12) auf den jeweiligen Kraftaufnehmer (26a-26d) ausgeübte Gewichtskraft zu erfassen; und
    - wobei der Tragrahmen (18) den Vorratsbehälter (12) trägt, **dadurch gekennzeichnet, dass** die mehreren Kraftaufnehmer (26a-26d) zwischen dem Tragrahmen (18) und dem Vorratsbehälter (12) angeordnet sind;

- wobei eine Auswerteeinrichtung (34) vorhanden ist, welche dazu eingerichtet ist, auf Grundlage der Signale der Kraftaufnehmer (26a-26d) die Last an einer oder mehreren Positionen des gezogenen Großflächenstreuers (10) zu ermitteln,
- wobei an der Tragachse (22) zumindest zwei Laufräder (24a, 24b) angeordnet sind,
- wobei die Zugdeichsel als eine Stützlast aufnehmende Zugdeichsel (20) ausgebildet ist;
- wobei die Auswerteeinrichtung (34) weiterhin dazu eingerichtet ist, die Achslast der Tragachse (22) zu ermitteln und bei der Ermittlung der Achslast der Tragachse (22) vorzugsweise die Position der Tragachse (22) zu berücksichtigen,
- wobei die Zugdeichsel (20) zum Koppeln des gezogenen Großflächenstreuers (10) an eine Zugmaschine vorgesehen ist;
- wobei die Auswerteeinrichtung (34) weiterhin dazu eingerichtet ist, die Stützlast an der Zugdeichsel (20) zu ermitteln und bei der Ermittlung der Stützlast an der Zugdeichsel (20) vorzugsweise die Position der Zugdeichsel (20) zu berücksichtigen;
- wobei eine Anzeigeeinrichtung (36a, 36b) vorhanden ist, welche dazu eingerichtet ist, einem Benutzer des gezogenen Großflächenstreuers (10) die ermittelte Last an der einen oder den mehreren Positionen der Verteilmaschine (10), insbesondere die Achslast der Tragachse (22) und/oder die Stützlast an der Zugdeichsel (20), anzuzeigen.

2. Gezogener Großflächenstreuer (10) nach Anspruch 1, **dadurch gekennzeichnet, dass** die Auswerteeinrichtung (34) dazu eingerichtet ist, bei der Ermittlung der Last an der einen oder den mehreren Positionen des gezogenen Großflächenstreuers (10) die Anordnung und/oder die Positionen der mehreren Kraftaufnehmer (26a-26d) zu berücksichtigen.

3. Gezogener Großflächenstreuer (10) nach einem der vorstehenden Ansprüche, **dadurch gekennzeichnet, dass** die mehreren Kraftaufnehmer (26a-26d) zumindest drei voneinander beabstandete Kraftaufnehmer (26a-26d) umfassen oder exakt vier voneinander beabstandete Kraftaufnehmer (26a-26d) sind.

4. Gezogener Großflächenstreuer (10) nach einem der vorstehenden Ansprüche, **dadurch gekennzeichnet, dass** zumindest einzelne der mehreren Kraftaufnehmer (26a-26d) in Fahrtrichtung voneinander beabstandet angeordnet sind.

5. Gezogener Großflächenstreuer (10) nach einem der vorstehenden Ansprüche, **dadurch gekennzeichnet, dass** zumindest einzelne der mehreren Kraftaufnehmer (26a-26d) quer zur Fahrtrichtung voneinander beabstandet angeordnet sind.

6. Gezogener Großflächenstreuer (10) nach einem der vorstehenden Ansprüche, **dadurch gekennzeichnet, dass** der Tragrahmen (18) der Fahrwerksrahmen des gezogenen Großflächenstreuers (10) ist oder auf den Fahrwerksrahmen des gezogenen Großflächenstreuers (10) aufgesetzt ist.

## Claims

1. Towed large-area distributor (10), having a storage container (12), a tow bar (20), and at least one bearing axle (22),

   - wherein the storage container (12) is specified for receiving material to be distributed;
   - wherein the distribution installation (14) is specified for distributing the material situated in the storage container (12) uniformly on arable land;
   - wherein a plurality of force transducers (26a-26d) that are disposed so as to be mutually spaced apart are present, said force transducers (26a-26d) being specified for detecting the weight force exerted by the storage container (12) on the respective force transducer (26a-26d); and
   - wherein the support frame (18) supports the storage container (12),

   **characterized in that**

   - the plurality of force transducers (26a-26d) are disposed between the support frame (18) and the storage container (12);
   - wherein an evaluation installation (34) which, based on the signals of the force transducers (26a-26d), is specified for determining the load at one or a plurality of positions of the towed large-area distributor (10) is present;
   - wherein at least two running wheels (24a, 24b) are disposed on the bearing axle (22);
   - wherein the tow bar is configured as a noseweight bearing tow bar (20);
   - wherein the evaluation installation (34) is furthermore specified for determining the axle load of the bearing axle (22) and preferably for considering the position of the bearing axle (22) when determining the axle load of the bearing axle (22);
   - wherein the tow bar (20) is provided for coupling the towed large-area distributor (10) to a motor tractor;
   - wherein the evaluation installation (34) is furthermore specified for determining the nose weight on the tow bar (20) and preferably for considering the position of the tow bar (20) when determining the nose weight on the tow bar (20) ;
- wherein a display installation (36a, 36b) which is specified for displaying the load determined at the one or the plurality of positions of the mechanical distributor (10), in particular the axle load of the bearing axle (22) and/or the nose weight on the tow bar (20), to a user of the towed large-area distributor (10) is present.

2. Towed large-area distributor (10) according to Claim 1, **characterized in that** the evaluation installation (34) is specified for considering the arrangement and/or the positions of the plurality of force transducers (26a-26d) when determining the load at the one or the plurality of positions of the towed large-area distributor (10).

3. Towed large-area distributor (10) according to one of the preceding claims, **characterized in that** the plurality of force transducers (26a-26d) comprise at least three mutually spaced apart force transducers (26a-26d), or are exactly four mutually spaced apparat force transducers (26a-26d).

4. Towed large-area distributor (10) according to one of the preceding claims, **characterized in that** at least some of the plurality of force transducers (26a-26d) are disposed so as to be mutually spaced apart in the direction of travel.

5. Towed large-area distributor (10) according to one of the preceding claims, **characterized in that** at least some of the plurality of force transducers (26a-26d) are disposed so as to be mutually spaced apart transversely to the direction of travel.

6. Towed large-area distributor (10) according to one of the preceding claims, **characterized in that** the support frame (18) is the chassis frame of the towed large-area distributor (10) or is mounted on the chassis frame of the towed large-area distributor (10).

**Revendications**

1. Épandeur de grande culture tracté (10), avec un réservoir (12), une barre de traction (20) et au moins un essieu porteur (22),

   - le réservoir (12) étant conçu pour loger le matériau à épandre ;
   - le dispositif à soupape (14) étant conçu pour répartir le matériau se trouvant dans le réservoir (12) uniformément sur une surface agricole ;
   - plusieurs capteurs de force (26a-26d), distants les uns des autres, étant prévus, qui sont conçus pour mesurer la force de gravité exercée par le réservoir (12) sur le capteur de force (26a-26d) correspondant ; et
- le châssis porteur (18) supportant le réservoir (12), **caractérisé en ce que** les plusieurs capteurs de force (26a-26d) sont disposés entre le châssis porteur (18) et le réservoir (12) ;
- un dispositif d'analyse (34) étant prévu, qui est conçu pour déterminer, sur la base des signaux des capteurs de force (26a-26d), la charge au niveau d'une ou de plusieurs positions de l'épandeur de grande culture tracté (10),
- au moins deux roues (24a, 24b) étant disposées sur l'essieu porteur (22),
- la barre de traction étant conçue comme une barre de traction (20) absorbant une charge d'appui ;
- le dispositif d'analyse (34) étant en outre conçu pour déterminer la charge sur l'essieu porteur (22) et de prendre en compte, lors de la détermination de la charge sur l'essieu porteur (22), de préférence la position de l'essieu porteur (22),
- la barre de traction (20) étant conçue pour le couplage de l'épandeur de grande culture tracté (10) à un tracteur ;
- le dispositif d'analyse (34) étant en outre conçu pour déterminer la charge d'appui au niveau de la barre de traction (20) et pour prendre en compte, lors de la détermination de la charge d'appui au niveau de la barre de traction (20), de préférence la position de la barre de traction (20) ;
- un dispositif d'affichage (36a, 36b) étant prévu, qui est conçu pour afficher, à l'attention d'un utilisateur de l'épandeur de grande culture (10), la charge déterminée au niveau d'une ou des plusieurs positions de l'épandeur (10), plus particulièrement la charge sur l'essieu porteur (22) et/ou la charge d'appui au niveau de la barre de traction (20).

2. Épandeur de grande culture tracté (10) selon la revendication 1, **caractérisé en ce que** le dispositif d'analyse (34) est conçu pour prendre en compte, lors de la détermination de la charge au niveau d'une ou des plusieurs positions de l'épandeur de grande culture (10) tracté, la disposition et/ou les positions des plusieurs capteurs de force (26a-26d).

3. Épandeur de grande culture (10) selon l'une des revendications précédentes, **caractérisé en ce que** les plusieurs capteurs de force (26a-26d) comprennent au moins trois capteurs de force (26a-26d) distants entre eux ou sont exactement quatre capteurs de force (26a-26d) distants entre eux.

4. Épandeur de grande culture (10) selon l'une des revendications précédentes, **caractérisé en ce qu'**au moins certains des plusieurs capteurs de force (26a-26d) sont disposés de manière distante entre eux dans le sens de la marche.

5. Épandeur de grande culture (10) selon l'une des revendications précédentes, **caractérisé en ce qu'**au moins certains des plusieurs capteurs de force (26a-26d) sont disposés de manière distante entre eux transversalement par rapport au sens de la marche.

6. Épandeur de grande culture (10) selon l'une des revendications précédentes, **caractérisé en ce que** le châssis porteur (18) est le cadre de châssis de l'épandeur de grande culture tracté (10) ou est posé sur le cadre de châssis de l'épandeur de grande culture tracté (10).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1739398 A1
- DE 10154733 A1
- EP 2275287 B1
- EP 2522775 A2

- DE 202005017281 U1
- US 5814771 A
- GB 2304910 A